# EUROPÄISCHE PATENTSCHRIFT

(11) **EP 1 124 995 B1**
(45) Veröffentlichungstag und Bekanntmachung des Hinweises auf die Patenterteilung: **17.07.2002**
(21) Anmeldenummer: 99947405.9
(22) Anmeldetag: 22.09.1999
(51) Int. Cl.: C21C 5/52, C21C 5/56, C21B 13/02, C21B 13/12, F27B 3/08, F27B 3/18, F27B 3/26, F27D 17/00, F27D 13/00

(54) **GLEICHSTROMLICHTBOGENOFEN MIT MITTIGEM CHARGIERSCHACHT ZUR HERSTELLUNG VON STAHL SOWIE VERFAHREN HIERZU**
DIRECT-CURRENT ARC FURNACE WITH CENTRAL CHARGING SHAFT FOR STEEL PRODUCTION AND METHOD OF PRODUCING STEEL
FOUR ELECTRIQUE A COURANT CONTINU INCLUYANT UNE CUVE CENTRALE DE CHARGEMENT POUR LA PRODUCTION D'ACIER ET PROCEDE POUR PRODUIRE DE L'ACIER

(30) Priorität: 07.10.1998 DE 19846100
(43) Veröffentlichungstag der Anmeldung: 22.08.2001
(73) Patentinhaber: SMS SCHLOEMANN-SIEMAG AKTIENGESELLSCHAFT, 40237 Düsseldorf (DE)
(72) Erfinder: PLESCHIUTSCHNIGG, Fritz-Peter, D-47269 Duisburg (DE); WU, Wei-Ping, D-40699 Erkrath (DE)
(74) Vertreter: Valentin, Ekkehard, Dipl.-Ing.
(86) Internationale Anmeldenummer: EP9907046
(87) Internationale Veröffentlichungsnummer: WO0020650

(56) Entgegenhaltungen:
- EP-A- 0 663 450
- WO-A-93/13228
- DE-A- 4 332 913
- FR-A- 2 627 578
- GB-A- 827 205
- US-A- 5 479 435
- HOFMANN W ET AL: "CONTIARC - A NEW SCRAP MELTING TECHNOLOGY" , STEEL TIMES - INCORPORATING IRON & STEEL,GB,FUEL & METALLURGICAL JOURNALS LTD. LONDON, VOL. 224, NR. 3, PAGE(S) 103,105-106 XP000583748 ISSN: 0039-095X Seite 103; Abbildung 1
- PATENT ABSTRACTS OF JAPAN vol. 013, no. 434 (M-875), 28. September 1989 (1989-09-28) & JP 01 167573 A (DAIDO STEEL CO LTD), 3. Juli 1989 (1989-07-03)

## Beschreibung

Die Erfindung betrifft einen Gleichstromlichtbogenofen zur Herstellung von Stahl, umfassend ein Einschmelzgefäß mit mindestens zwei Elektroden zur Erzeugung von Lichtbögen sowie mit Abstichöffnungen für Schmelze und Schlakke. Sie betrifft ferner ein Verfahren hierzu.

Es sind mehrere Verfahren zur Erzeugung von Stahl bekannt. Hier haben sich im wesentlichen zwei Verfahrensrouten durchgesetzt, zum einen die Stahlherstellung nach der konventionellen Hochofen-Konverter-Route, zum anderen die im Elektrostahlofen.

Bei einem Elektrostahlofen handelt es sich üblicherweise um eine flachzylindrisches bzw. ovales Gefäß zum Einschmelzen von Schrott bzw. direkt reduziertem Eisen (Eisenschwamm). Bei den Elektrolichtbogenöfen wird üblicherweise der Ofen bei ausgeschwenktem Deckel befüllt, und die Charge wird mit den Lichtbögen der Elektroden, die durch den Deckel in den Ofen ragen, aufgeschmolzen. Die Entleerung des Ofens erfolgt je nach Ofentyp über eine Abstichrinne oder einen exzentrischen Bodenabstich. Es sind Elektrolichtbogenöfen in AC- (Wechselstrom) als auch in DC-Version (Gleichstrom) bekannt.

Konventionelle Gleichstromlichtbogenöfen weisen eine Graphitelektrode und eine Bodenelektrode auf. Der entstehende Lichtbogen ist senkrecht nach unten auf das Stahlbad gerichtet. In jüngster Zeit sind auch Gleichstromlichtbogenöfen mit zwei Graphitelektroden bekannt geworden. Konventionelle Gleichstromlichtbogenöfen weisen folgende Nachteile auf.

Während des Schmelzvorgangs kommt es zu einer Lichtbogenablenkung, was eine hohe Belastung für das Feuerfestmaterial bedeutet. In der Flachbadphase ist daher eine hohe Schaumschlacke zur Abdeckung des Lichtbogens und zum Schutz der Gefäßwände erforderlich.

Beim Chargiervorgang ist das entstehende Abgas bzw. Staub nicht kontrollierbar. Ebenfalls ist keine Kontrolle über die Eisenoxidation des einzuschmelzenden Schrotts in den heißen Gasen möglich.

Ferner kommt es zu Elektrodenbrüchen durch Abstürzen des Schrottes.

Außerdem sind die Temperaturen der austretenden Gase zu gering, so daß sie erneut erhitzt werden müssen, um eine Dioxinbildung zu verhindern. Hierzu sind zusätzliche Brenner im Abgassystem erforderlich.

Bei den Gleichstromlichtbogenöfen mit zwei Elektroden kommt es zu einer starken Wärmebelastung zwischen den beiden Elektroden am Ofendeckelbereich.

Aus der EP 0 663 450 A1 ist ein Verfahren und eine Vorrichtung zur Herstellung von Eisenschmelzen in Herd-Schachtöfen bekannt. Die offenbarte Anlage umfaßt ein eine Eisenschmelze aufnehmendes metallurgisches Gefäß, mindestens einen ortsfesten, Eisenträger aufnehmenden Schacht, der in das metallurgische Gefäß über dessen Deckel mittels einer Absperreinrichtung mündet sowie in das metallurgische Gefäß von oben ragende Elektroden, die von einer in Richtung zum Gefäßzentrum gerichteten Position in eine näher zur Wand des metallurgischen Gefäßes gerichteten Position schwenkbar sind. Der Schacht kann über eine Dekkelöffnung in das metallurgische Gefäß münden und dient als Vorwärmschacht, um die Eisenträger mit aus dem Gefäß abgezogenen heißen Prozeßgasen zu urnströmen bzw. vorzuwärmen. Als Ausführungsform ist ein 100t-DC-Elektro-Lichtbogenofen beschrieben. Das Chargieren nach der EP 0 663 450 A1 erfolgt in Teilmengen, wobei jeweils über die Absperreinrichtung an der Schachtmündung zum Gefäß die Proportionierung regelbar ist.

Die FR 2 627 578 A beschreibt einen Gleichstrom-Elektroofen zum Aufschmelzen von Material, wobei das Chargieren des Materials über Klappen im Mündungsbereich eines Schachtes in das Schmelzgefäß geregelt wird. Es sind Gasausgangsleitungen am oberen Teil des Schmelzgefäßes vorgesehen, um die bei der Behandlung des Materials entweichenden Gase abzuziehen.

Aus der US 5,479,435 ist ebenfalls ein Gleichstrom-Lichtbogenofen bekannt mit zwei Stabelektroden und einer Bodenelektrode, wobei in mittiger Verlängerung des Gefäßes ein Schacht zum Vorwärmen des Chargiermaterials über die aus dem Gefäß durch den Vorwärmschacht strömenden heißen Gase vorgesehen ist .

Schließlich ist aus der WO 93/13228 ein Verfahren zum Einschmelzen von Schrott sowie eine Vorrichtung hierzu beschrieben, wobei ein Chargierrohr für den Schrott einen das Einschmelzgefäß verschließenden Deckel durchsetzt und in das Gefäß hineinragt. Zur Vorwärmung der sich außerhalb des Ofens befindlichen Schrottsäule wird das im Gegenstrom zur absinkenden Schrottsäule geführte Abgas verwendet, welches in einem konzentrisch zum Chargierrohr geführten weiteren Rohr abgeführt wird.

Der vorliegenden Erfindung liegt die Aufgabe zugrunde, einen Gleichstromlichtbogenofen und ein Verfahren zur Herstellung von Stahl vorzuschlagen, wobei trotz Erhöhung der Produktivität geringere Belastungen für den Ofen und Umwelt auftreten.

Diese Aufgabe wird erfindungsgemäß mittels der Merkmale des Ofens nach Anspruch 1 sowie der Merkmale des Verfahrensanspruchs 9 gelöst. Vorteilhafte Ausgestaltungen der Erfindung sind in den Unteransprüchen offenbart.

Die Erfindung, geht von einem Gleichstromlichtbogenofen aus mit zwei Elektroden und mindestens einer Bodenelektrode in dem Ofengefäß, wobei zwei schräg verlaufende Lichtbögen zur Bodenmitte des Schmelzofens hin entstehen und wobei das Einschmelzgefäß nach oben durch einen mittigen Schacht zum Einführen von Einschmelzmaterial in das Gefäß sowie zur Bildung einer Einschmelzmaterialsäule verlängert ist.

Aufgrund dieser Merkmale wird erreicht, daß zwei Lichtbögen kontrolliert unterhalb der Einschmelzmaterialsäule brennen. Durch diese gezielte Lichtbogenablenkung und durch den vorgesehenen Chargierschacht ist ein kontrolliertes, gleichmäßiges Nachrücken des Einschmelzmaterials in das Ofengefäß und ein leistungsstarker Schmelzvorgang gewährleistet. Bei dem Einsatz von Schrott wird ein besseres Schrottschneiden und schnelleres Schneiden realisierbar.

Durch diese Lösung ist eine Verdopplung der bisherigen Leistung einer konventionellen Graphitelektrode von 140kVA bzw. 110 MW erreichbar bzw. eine Reduzierung des Durchmessers der beiden Elektroden und dadurch des Elektrodenverbrauchs.

Denkbar ist neben der Anordnung von zwei Elektroden (Kathoden) und einer (gemeinsamen) Bodenelektrode (Anode) auch die Anordnung zweier Kathoden und zweier Anoden. Die Anoden sind Bodenelektroden und derart an der Bodenmitte angeordnet, daß zwei schräg zur Bodenmitte hin verlaufende Lichtbögen entstehen. Schließlich werden femer alle Ausführungsformen mit einer größeren Anzahl an Elektroden vorgeschlagen, wobei das Merkmal des schräg verlaufenden Lichtbogens immer erfüllt ist.

Von Vorteil ist weiterhin, daß aufgrund des Chargierschachtes ein Abstürzen des Schrottes und somit Elektrodenbrüche vermieden werden können. Es ist eine Absaugeinrichtung in Verlängerung des Schachtes zum Absaugen der Abgase während des Einschmelzvorgangs vorgesehen.

Die Elektroden sind so angeordnet, daß die Lichtbögen nicht vertikal, sondern schräg verlaufen. Somit ist eine geringere Schlackenhöhe zur Abdeckung des Lichtbogens erforderlich.

Zur gleichzeitigen Kontrolle der Abgase wird erfindungsgemäß vorgeschlagen, daß benachbart zu dem Schacht Öffnungen im oberen Teil des Einschmetzgefäßes vorgesehen sind zur Aufnahme einer Absaugeinrichtung für Staub und/oder Gase, die während des Chargiervorgangs des Einschmelzmaterials entstehen.

Somit wird eine Abgaskontrolle schon beim Chargiervorgang möglich. Durch die alleinige Absaugung der Gase mittels der Gefäßabsaugeinrichtung kann eine Eisenoxidation des Einschmelzmaterials weitgehend vermieden werden.

Diese gezielte Abgaskontrolle bringt gleichzeitig den Vorteil, daß das Absaugen der Abgase während des Einschmelzvorgangs durch den Schacht für eine Vorwärmung des Schrotts genutzt wird. Die Schrottvorwärmung findet nur während der Absaugphase der Gase durch den Schacht statt. Hierdurch wind die Vorwärmzeit kontrollierbar und somit die Eisenoxidation des Einschmelzmaterials.

Es wird vorgeschlagen, daß die Schachtabsaugeinrichtung und die Gefäßabsaugeinrichtung so gestaltet sind, daß sie vorzugsweise in einem gemeinsamen Absaugrohr enden und daß Mittel vorgesehen sind zum Umschalten zwischen der Schachtabsaug- bzw. der Gefäßabsaugeinrichtung, um zwischen den beiden Absaugeinrichtungen und Abgasströmungen beim Chargier- und Einschmelzprozeß zu wechseln. Die beiden Absaugeinrichtungen sind somit zu einer Einrichtung verbunden. Durch die vorgeschlagenen Umschaltelemente ist es möglich, jeweils nur eine Abgaseinrichtung zu betätigen bzw. eine Kombination der Abgasströmungen einzustellen. Es ist eine Kontrolle der Abgasströme sowie der Abgasmenge realisierbar. Diese Ausgestaltung der Absaugeinrichtungen stellt eine Direktabsaugung dar, so daß in Kombination mit dem vorgeschlagenen Schacht das Auffangen und Entstauben der beim Chargieren und Einschmelzen und Abstechen entstehenden Rauchgase möglich wird.

Durch eine Änderung der Abgasstromrichtung im Schacht wird ebenfalls eine Abgastemperaturkontrolle realisierbar. Durch kontrolliertes Vermischen der beiden Abgasströme ist ein Aufheizen des Gases auf Temperaturen oberhalb der Dioxinbildung erreichbar.

Erfindungsgemäß weist das Einschmelzgefäß in seinem oberen Teil neben dem Schacht und den Öffnungen für die Elektroden Öffnungen für die Gefäßabsaugeinrichtungen auf. Es empfiehlt sich besonders, die Öffnungen für die Elektroden im Verhältnis zum Schacht so anzuordnen, daß der Schacht bzw. die durch den Schacht geführte Einschmelzmaterialsäule als thermische Abschirmung zwischen den beiden Elektroden bzw. als Abschirmung vor zu hoher Wärmeenergie für den oberen Gefäßbereich dient.

Eine bevorzugte Ausführungsform des Gleichstromlichtbogenofens besteht aus einem unteren Schmelzgefäß mit einem oberen Deckel, der mit den vorgeschlagenen Öffnungen versehen ist.

In einer noch konkreteren Ausführungsform ist der Gleichstromlichtbogenofen mit einer Gefäßabsaugeinrichtung versehen, die zwei sich nach oben erstrekkende Rohrleitungen umfaßt, die in ein Rohr für die Schachtabsaugeinrichtung einlaufen, wobei im Übergangsbereich schwenkbare Klappen, beispielsweise aus warmfesten Stahl, vorgesehen sind zur Beeinflussung der jeweiligen Abgasmengen und -strömungen.

Das Schmelzgefäß ist weiterhin mit Mitteln zum vertikalen Einführen der Elektroden für den Schmelzprozeß und Ausführen der Elektroden für den Chargierprozeß ausgestattet.

Des weiteren sind an den Innenwänden des Einschmelzgefäßes Gas- sowie Sauerstoffbrenner angeordnet, durch die bei Bedarf noch höhere Schmelzleistungen erzielbar sind. Femer können Unterbaddüsen vorgesehen sein.

Insgesamt zeigt der vorgeschlagene Gleichstromlichtbogenofen zu bekannten Arten den Vorteil, daß zum Chargieren kein Verschwenken des Deckels mehr notwendig ist sowie ein gasdichter Ofenbetrieb realisierbar ist.

Weitere Einzelheiten und Vorteile der Erfindung ergeben sich aus den Ansprüchen und der nachfolgenden Beschreibung. Hierbei zeigen:
- Figur 1: eine schematische Seitenansicht des Ofengefäßes mit der Abgaseinrichtung;
- Figur 2: eine schematische Draufsicht auf das Ofengefäß mit Abgaseinrichtung;
- Figur 3: eine schematische Seitenansicht des Ofengefäßes mit dem Abgasfluß während des Chargierprozesses;
- Figur 4: eine schematische Seitenansicht des Ofengefäßes mit dem Abgasfluß während des Schmelzprozesses.

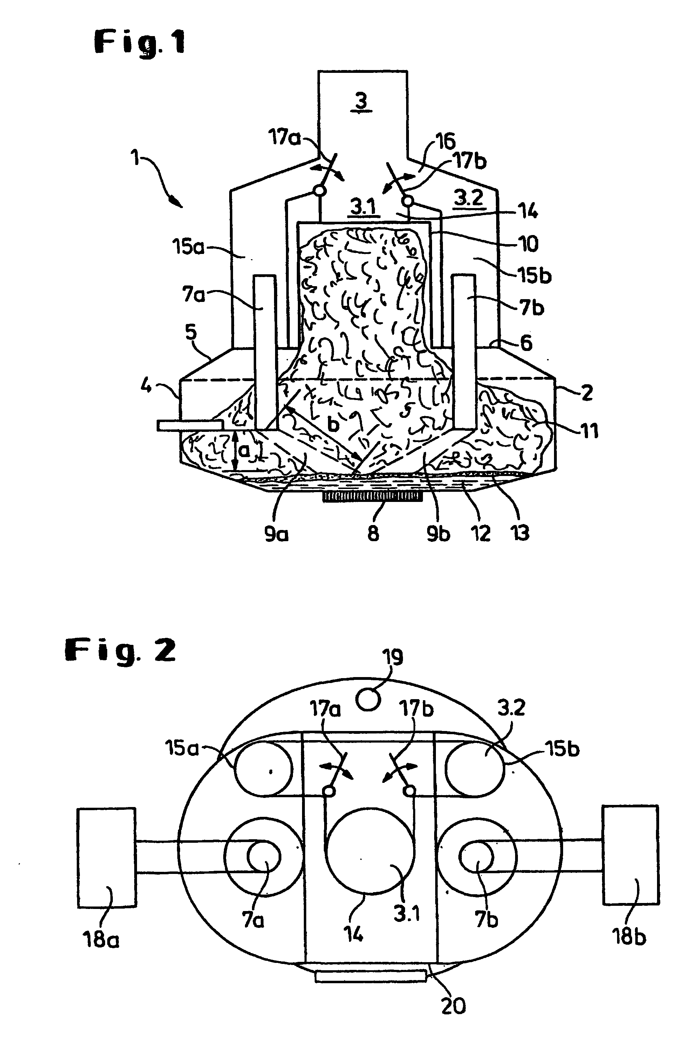

Figur 1 zeigt einen Gleichstromlichtbogenofen 1, bestehend aus einem Ofengefäß 2 und einer Abgaseinrichtung 3. Das Ofengefäß 2 setzt sich aus einem Einschmelzbereich 4 und einem Deckel 5 zusammen. Durch Öffnungen 6 im Deckel 5 werden zwei Elektroden (Kathoden) 7a,b in das Gefäß eingeführt. Am Boden des Gefäßes befindet sich zwischen den beiden Elektroden 7a,b eine Bodenelektrode 8. Es entstehen zwei schräg geführte Lichtbogen 9a,b. Deren Länge, hier mit b bezeichnet, ist größer als die Länge eines vertikal verlaufenden Lichtbogens (Länge a) bei bekannten Gleichstromlichtbogenöfen.

Oberhalb des Ofengefäßes 2 ist mittig ein Schacht 10 angeordnet. Über diesen Schacht 10 wird das Ofengefäß 2 mit Einschmelzmaterial 11, insbesondere Schrott und Eisenschwamm, befüllt. Der durch die Energie der Lichtbögen 9a,b entstehende Flüssigstahl ist 12 mit bezeichnet, die Schlacke mit 13.

In Verlängerung zum Schacht 10 ist eine Schachtabsaugeinrichtung 3.1 vorgesehen. Die Schachtabsaugeinrichtung 3.1 besteht aus einem Rohrzylinder 14, Mitteln zum Absaugen sowie einer Filteranlage (nicht gezeigt). Der Rohrzylinder 14 ist seitlich mit zwei Führungsrohren 15a,b verbunden, die die Gefäßabsaugeinrichtung 3.2 bilden. An den Schnittstellen 16 zwischen den beiden Einrichtungen 3.1, 3.2 befinden sich verfahrbare Umschaltelemente in Form von Klappen 17a,b. Diese verhindern in einer Position den Abgasfluß durch die Führungsrohre 15a,b der Gefäßabsaugeinrichtung 3.2, durch Verfahren der Klappen 17a,b kann in der anderen Extremposition die Absaugeinrichtung 3.1 oberhalb des Schachtes 10 versperrt werden. Das Einstellen von Zwischenpositionen ist möglich.

Die Draufsicht nach Figur 2 verdeutlicht die vorgeschlagene Anordnung des Schachtes 10 mit Schachtabsaugrohr 14, die benachbart zu dem Schacht 10 angeordneten Elektroden 7a,b mit Mitteln zum Verfahren der Elektroden 18a,b sowie die Führungsrohre 15a,b der Gefäßabsaugeinrichtung 3.1. Schematisch sind die Abstichrinne 19 für den Flüssigstahl sowie die Schlackentür 20 gezeigt.

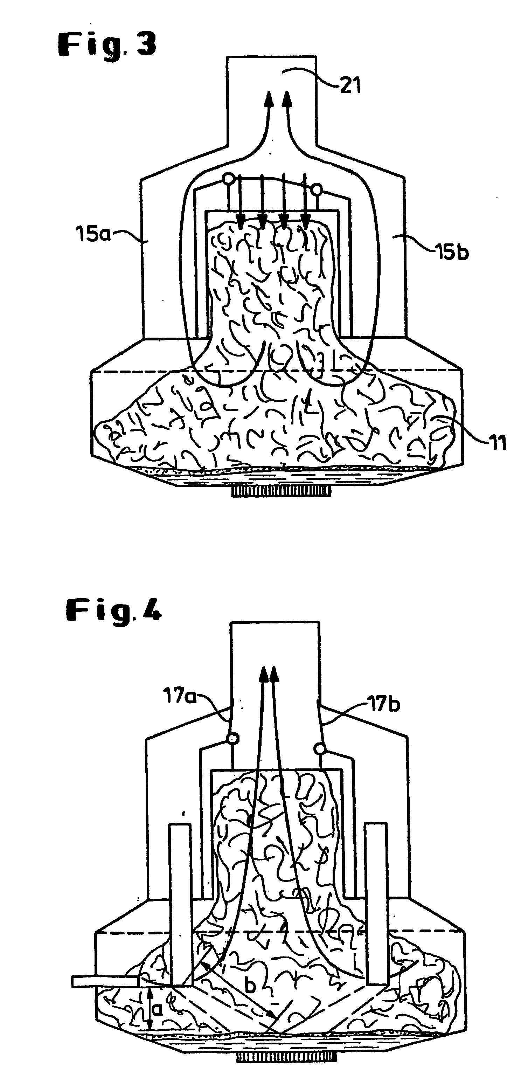

Mittels der vorgeschlagenen Gasabsaugeinrichtungen 3.1 und 3.2 ist es möglich, die Abgasströmungen zu kontrollieren. Figur 3 zeigt den Strömungsverlauf (Pfeilverlauf) von Abgasen und Staub beim Chargieren des Einschmelzmaterials 11, wobei die Abgase und Staub über die Führungsrohre 15a,b der Gefäßabsaugeinrichtung 3.2 in ein gemeinsames Rohr 21 abgezogen werden. Danach schließen sich in konventioneller Weise Filteranlagen (nicht gezeigt) bzw. Rückgewinnungsanlagen an.

Während des Schmelzvorgangs (Figur 4) sind die Klappen 17a,b derart angeordnet, daß die Führungsrohre 15a,b der Gefäßabsaugeinrichtung 3.2 verschlossen sind. Die beim Schmelzen entstehenden Gase, vor allem Verbrennungsoxide, fließen durch den Schacht 10 und somit durch die Schrottsäule ab (vgl. Pfeilverlauf in Figur 4).

## Patentansprüche

1. Gleichstromlichtbogen zur Herstellung von Stahl, umfassend ein Einschmelzgefäß mit Elektroden zur Erzeugung von Lichtbögen sowie mit Abstichöffnungen für Schmelze und Schlacke sowie Mitteln zur direkten Erfassung der Abgase, wobei mindestens zwei von oben in das Einschmelzgefäß (2) eingeführte Elektroden (7a,b) und mindestens eine Bodenelektrode (8) so angeordnet sind, daß zwei schräg verlaufende Lichtbögen (9a,b) zur Bodenmitte des Schmelzofens hin entstehen, und wobei das Einschmelzgefäß (2) nach oben durch einen mittigen Schacht (10) zum Einführen von Einschmelzmaterial (11) in das Gefäß verlängert ist, die Verlängerung des mittigen Schachtes zur Bildung einer Einschmelzmaterialsäule dient und wobei eine Absaugeinrichtung (3.1) in Verlängerung des Schachtes (10) zum Absaugen der Abgase während des Einschmelzvorgangs vorgesehen ist,
**dadurch gekennzeichnet,**
**daß** benachbart zu dem Schacht (10) Öffnungen im oberen Teil des Einschmelzgefäßes vorgesehen sind zur Aufnahme von Absaugeinrichtungen (3.2) für Staub und/oder Gase, die während des Chargiervorgangs des Einschmelzmaterials entstehen, und
**daß** die Schachtabsaugeinrichtung (3.1) und die Gefäßabsaugeinrichtung (3.2) zu einer gemeinsamen Einrichtung (3) verbunden sind und daß Umschaltelemente (17a, b) vorgesehen sind zum Betätigen jeweils nur einer Abgaseinrichtung und/oder zum Einstellen einer Kombination der Abgasströmungen in Abhängigkeit vom Chargier- und Einschmelzprozeß.

2. Gleichstromlichtbogenofen nach Anspruch 1,
**dadurch gekennzeichnet,**
**daß** die Schachtabsaugeinrichtung (3.1) und die Gefäßabsaugeinrichtung (3.2) so gestaltet sind, daß sie in einem gemeinsamen Absaugrohr (21) enden und daß die Umschaltelemente (17a,b) zwischen der Schachtabsaug- bzw. der Gefäßabsaugeinrichtung vorgesehen sind, um zwischen beiden Absaugeinrichtungen beim Chargier- und Einschmelzprozeß zu wechseln.

3. Gleichstromlichtbogenofen nach Anspruch 2,
**dadurch gekennzeichnet,**
**daß** im Gefäßoberteil Öffnungen (6) für die Elektroden im Verhältnis zum Schacht (10) so angeordnet sind, daß der Schacht bzw. die durch den Schacht geführte Einschmelzmaterialsäule als thermische Abschirmung zwischen den beiden Elektroden dient.

4. Gleichstromlichtbogenofen nach Anspruch 3,
**dadurch gekennzeichnet,**
**daß** das Einschmelzgefäß (2) sich aus einem unteren Schmelzbereich (4) und einem oberen Deckel (5), der mit Öffnungen versehen ist, zusammensetzt.

5. Gleichstromlichtbogenofen nach Anspruch 2,
**dadurch gekennzeichnet,**
**daß** die Gefäßabsaugeinrichtung (3.2) zwei sich nach oben erstreckende Führungsrohre (15a,b) umfaßt, die in die Schachtabsaugeinrichtung (3.1) in Form eines Rohres (14) einlaufen, wobei im Übergangsbereich (16) schwenkbare Klappen (17a,b) vorgesehen sind zur Beeinflussung der jeweiligen Abgasmengen und -strömungen.

6. Gleichstromlichtbogenofen nach Anspruch 3,
**dadurch gekennzeichnet,**
**daß** Mittel (18 a, b) zum vertikalen Einführen bzw. Nachführen der Elektroden in das Gefäß (2) für den Schmelzprozeß und Ausführen der Elektroden für den Chargierprozeß vorgesehen sind.

7. Gleichstromlichtbogenofen nach einem der vorherigen Ansprüche,
**dadurch gekennzeichnet,**
**daß** an den Innenwänden des Einschmelzgefäßes Gas- sowie Sauerstoff-Brenner angeordnet sind.

8. Gleichstromlichtbogenofen nach einem der vorherigen Ansprüche,
**dadurch gekennzeichnet,**
**daß** es sich bei dem Einschmelzmaterial (11) um Schrott und direkt reduziertes Eisen handelt.

9. Verfahren zur Herstellung von Stahl in einem Gleichstromlichtbogenofen, indem das Einschmelzgefäß von oben mit dem aufzuschmelzenden Material chargiert wird und die Charge mittels der zwischen den Elektroden entstehenden Lichtbögen aufgeschmolzen wird, wobei die Chargierung des Ofengefäßes (2) mit Einschmelzmaterial (11) durch einen oberhalb des Ofengefäßes mittig angeordneten Schacht (10) erfolgt und die hauptsächliche Schmelzleistung der Elektroden (7a,b) im gefäßbodennahen Bereich unterhalb des Schachtes (10) stattfindet und wobei die während des Schmelzprozesses entstehenden Abgase mittels einer Absaugeinrichtung (3.1), die oberhalb des Schachtes (10) angeordnet ist, abgezogen werden und gleichzeitig durch den heißen Abgasfluß die nachrückende Einschmelzmaterialsäule im Schacht vorgewärmt wird,
**dadurch gekennzeichnet,**
**daß** während des Chargierens die hierbei entstehenden Gase und Staub über eine mit Öffnungen im oberen Teil des Einschmelzgefäßes verbundene Ofengefäßabsaugeinrichtung (3.2) abgezogen werden, wobei die Abgase aus der Ofengefäßabsaugeinrichtung (3.2) und der Schachtabsaugeinrichtung (3.1) in einer gemeinsamen Einrichtung (3) abgezogen werden.

## Claims

1. A direct-current arc furnace for producing steel, comprising a melt-down vessel with electrodes for generating arcs, discharge apertures for the molten mass and the slag, and means for directly capturing the exhaust gases, wherein at least two electrodes (7a, b) that can be inserted into the melt-down vessel (2) from the top and at least one bottom electrode (8) are arranged in such a way that two arcs (9a, b) are generated which transversely extend toward the center of the bottom of the melting furnace, wherein the melt-down vessel (2) is upwardly extended in the form of a central shaft (10) for introducing material (11) to be melted down into the vessel, wherein the extension of the central shaft serves for forming a column of the material to be melted down, and wherein a suction apparatus (3.1) is provided in an extension of the shaft (10) in order to remove the exhaust gases by suction during the melt-down process,
**characterized by** the fact
that openings for receiving suction apparatuses (3.2) for dust and/or gases created while charging the material to be melted down are provided in the upper section of the melt-down vessel adjacent to the shaft (10), by the fact
that the shaft suction apparatus (3.1) and the vessel suction apparatus (3.2) are connected so as to form a unit (3), and by the fact that change-over elements (17a, b) are provided for actuating only one respective suction apparatus and/or for adjusting a combination of the exhaust gas flows in dependence on the charging process and the melt-down process.

2. The direct-current arc furnace according to Claim 1,
**characterized by** the fact
that the shaft suction apparatus (3.1) and the vessel suction apparatus (3.2) are designed such that they end in a common suction pipe (21), and by the fact that the change-over elements (17a, b) are arranged between the shaft suction apparatus and the vessel suction apparatus in order to change over between the two suction apparatuses during the charging process and the melt-down process.

3. The direct-current arc furnace according to Claim 2,
**characterized by** the fact
that openings (6) for the electrodes are arranged in the upper section of the vessel in such a way referred to the shaft (10) that the shaft and the column of material to be melted down introduced through said shaft serve as thermal shields between the two electrodes.

4. The direct-current arc furnace according to Claim 3,
**characterized by** the fact
that the melt-down vessel (2) is composed of a lower melt-down region (4) and an upper cover (5) that is provided with openings.

5. The direct-current arc furnace according to Claim 2,
**characterized by** the fact
that the vessel suction apparatus (3.2) comprises two upwardly extending guide pipes (15a, b) that extend into the shaft suction apparatus (3.1) in the form of a pipe (14), wherein pivoted flaps (17a, b) for influencing the respective exhaust gas quantities and exhaust gas flows are provided in the transition region (16).

6. The direct-current arc furnace according to Claim 3,
**characterized by** the fact
that means (18a, b) are provided for vertically inserting and adjusting the electrodes into the vessel (2) for the melt-down process and for retracting the electrodes for the charging process.

7. The direct-current arc furnace according to one of the preceding claims,
**characterized by** the fact
that gas and oxygen burners are arranged on the inner walls of the melt-down vessel.

8. The direct-current arc furnace according to one of the preceding claims,
**characterized by** the fact
that the material (11) to be melted down consists of scrap and directly reduced iron.

9. A method for producing steel in a direct-current arc furnace by charging the melt-down vessel with the material to be melted down from the top and melting down the charge by means of the arc generated between the electrodes, wherein the furnace vessel (2) is charged with the material (11) to be melted down through a shaft (10) that is centrally arranged above the furnace vessel, wherein the predominant melting power of the electrodes (7a, b) occurs in the region underneath the shaft (10) which is situated near the bottom of the vessel, wherein the exhaust gases produced during the melt-down process are removed by suction with the aid of a suction apparatus (3.1) that is arranged above the shaft (10), and wherein the advancing column of material to be melted down is simultaneously preheated in the shaft by the hot exhaust gas flow,
**characterized by** the fact
that gases and dust produced during the charging process are removed by suction with the aid of a furnace vessel suction apparatus (3.2) that is connected to openings in the upper section of the melt-down vessel, wherein the exhaust gases are removed by suction from the furnace vessel suction apparatus (3.2) and the shaft suction apparatus (3.1) in a common apparatus (3).

## Revendications

1. Four électrique à courant continu pour la fabrication d'acier, comprenant un vase de refonte avec des électrodes pour la production d'arc électriques ainsi que des orifices de coulée pour la coulée et les scories ainsi que des moyens pour détecter directement les gaz d'échappement, au moins deux électrodes (7a, b) insérées par le haut dans le vase de refonte (2) et au moins une électrode de fond (8) étant disposées de manière à ce qu'apparaissent deux arcs électriques (9a, b) orientés à l'oblique par rapport au centre du fond du four de fusion et le vase de refonte (2) étant prolongé vers le haut par une cuve centrale (10) pour l'introduction de matière de refonte (11) dans le vase, le prolongement de la cuve centrale servant à former une colonne de matière de refonte et une installation d'aspiration (3.1) étant prévue dans le prolongement de la cuve (10) pour l'aspiration des gaz d'échappement pendant le processus de refonte,
**caractérisé en ce que**
près de la cuve (10), des orifices sont prévus dans la partie supérieur du vase de refonte pour recevoir des installations d'aspiration (3.2) de la poussière et/ou des gaz qui se dégagent pendant l'opération de chargement de la matière de refonte, et
que l'installation d'aspiration de la cuve (3.1) et l'installation d'aspiration du vase (3.2) sont jointes en une installation commune (3) et que des éléments de commutation (17a, b) sont prévus pour actionner respectivement une seule installation d'échappement de gaz et/ou pour régler une combinaison des flux de gaz d'échappement en fonction du processus de chargement et de refonte.

2. Four électrique à courant continu selon la revendication 1,
**caractérisé en ce que**
l'installation d'aspiration de la cuve (3.1) et l'installation d'aspiration du vase (3.2) sont configurées de manière à se terminer en un tuyau d'aspiration commun (21) et que les éléments de commutation (17a, b) sont prévus entre l'installation d'aspiration de la cuve et/ou l'installation d'aspiration du vase, afin de permuter entre les deux installations d'aspiration pendant le processus de chargement et de refonte.

3. Four électrique à courant continu selon la revendication 2,
**caractérisé en ce que**
dans la partie supérieure du vase, des orifices (6) pour les électrodes sont disposés par rapport à la cuve (10) de manière à ce que la cuve ou la colonne de matière de refonte introduite par l'intermédiaire de la cuve serve d'écran thermique entre les deux électrodes.

4. Four électrique à courant continu selon la revendication 3,
**caractérisé en ce que**
le vase de refonte (2) se compose d'une zone inférieure de fusion (4) et d'un couvercle supérieur (5) qui est muni d'ouvertures.

5. Four électrique à courant continu selon la revendication 2,
**caractérisé en ce que**
l'installation d'aspiration du vase (3.2) comporte deux tuyaux de guidage (15a, b) s'étendant vers le haut qui débouchent dans l'installation d'aspiration de la cuve (3.1) sous forme d'un seul tuyau (14), des trappes pivotantes (17a, b) étant prévues dans la zone de transition (16) pour jouer sur les quantités et les flux respectifs de gaz d'échappement.

6. Four électrique à courant continu selon la revendication 3,
**caractérisé en ce que**
des moyens (18a, b) sont prévus pour l'introduction ou la réintroduction verticale des électrodes dans le vase (2) pour le processus de fusion et le retrait des électrodes pour le processus de chargement.

7. Four électrique à courant continu selon une des revendications précédentes,
**caractérisé en ce que**
des brûleurs de gaz et d'oxygène sont installés sur les parois internes du vase de refonte.

8. Four électrique à courant continu selon une des revendications précédentes,
**caractérisé en ce que**
la matière de refonte (11) est composée de ferraille et de fer directement réduit.

9. Procédé pour la fabrication d'acier dans un four électrique à courant continu, dans lequel le vase de refonte est chargé du haut avec la matière à refondre et la charge est coulée au moyen d'arcs électriques apparaissant entre les électrodes, le chargement du vase du four (2) en matière de refonte (11) ayant lieu par une cuve (10) disposée au centre au dessus du vase du four et l'action principale de fusion des électrodes (7a, b) ayant lieu dans la zone proche du fond du vase sous la cuve (10) et les gaz d'échappement dégagés pendant le processus de fusion étant extraits au moyen d'une installation d'aspiration (3.1) qui est disposée au dessus de la cuve (10) et la colonne suivante de matière de refonte étant en même temps préchauffée dans la cuve par l'afflux de gaz d'échappement brûlant,
**caractérisé en ce que**
pendant le chargement, les gaz et la poussière alors dégagés sont extraits grâce à une installation d'aspiration du vase du four (3.2) reliée à des orifices dans la partie supérieure du vase de refonte, les gaz d'échappement provenant de l'installation d'aspiration du vase du four (3.2) et de l'installation d'aspiration de la cuve (3.1) étant extraits dans une installation commune (3).
